# EUROPÄISCHE PATENTANMELDUNG

(11) **EP 1 769 955 A2**
(43) Veröffentlichungstag der Anmeldung: **04.04.2007**
(21) Anmeldenummer: 06119276.1
(22) Anmeldetag: 22.07.2004
(51) Int. Cl.: B60J 3/04, B60J 3/02

(54) **Blendschutzsystem für ein Fahrzeug**

(30) Priorität: 04.08.2003 DE 10335600; 17.02.2004 DE 102004007521
(62) Teilanmeldung aus: 04762478.8
(71) Anmelder: ROBERT BOSCH GMBH, 70442 Stuttgart (DE)
(72) Erfinder: Marchthaler, Reiner, 73333, Gingen (DE); Wellhoefer, Matthias, 70499, Stuttgart (DE)

(57) **Zusammenfassung**

Die Erfindung betrifft ein BlendschuLzsystem für ein Fahrzeug. Das Blendschutzsystem umfasst eine Einrichtung für die Steuerung von Blendschutzmitteln. Dabei umfasst die Einrichtung wenigstens einen Bildgeber 11. Die Blendschutzmittel werden in Abhängigkeit von einem ersten Signal des Bildgebers gesteuert. Dabei wird die Lichtintensität im Fahrzeuginnenraum berücksichtigt.

## Beschreibung

### Stand der Technik

Die Erfindung geht aus von einem Blendschutzsystem für ein Fahrzeug nach der Gattung des unabhängigen Patentanspruchs.

Aus DE 100 12 749 A1 ist eine Einrichtung zur Ansteuerung eines Blendschutzes bekannt, die den Blendschutz in Abhängigkeit von einer Beleuchtung des Gesichts eines Fahrzeuginsassen ansteuert.

### Vorteile der Erfindung

Die erfindungsgemäße Einrichtung zur Ansteuerung eines Blendschutzes in einem Fahrzeug mit den Merkmalen des unabhängigen Patentanspruchs hat Vorteile.

### Zeichnung

Ausführungsbeispiele der Erfindung sind in der Zeichnung dargestellt und werden in der nachfolgenden Beschreibung näher erläutert. Es zeigen
- Figur 1: eine Fahrzeugscheibe mit einer selektiv absorbierenden Schicht,
- Figur 2: eine Fahrzeugscheibe mit einer steuerbaren, selektiv absorbierenden Schicht.

### Beschreibung

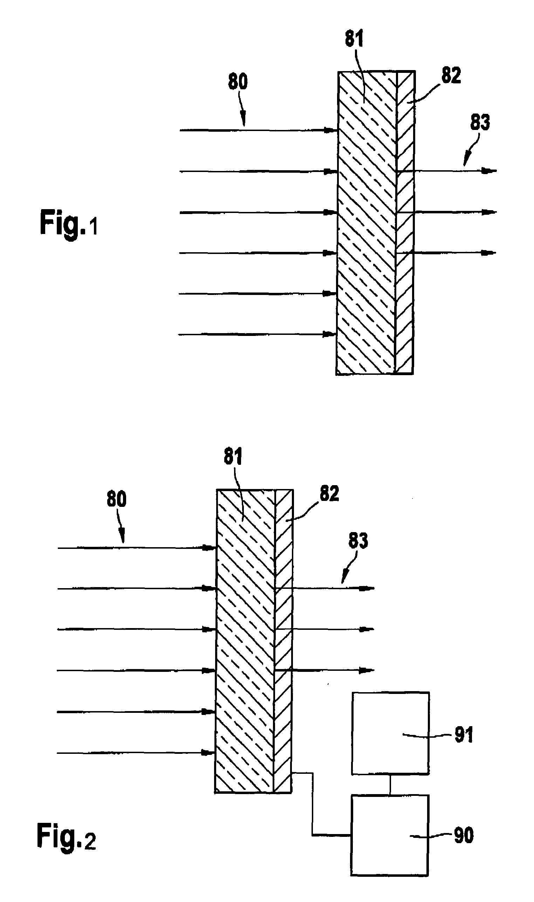

Bei einem besonders vorteilhaften Ausführungsbeispiel der Erfindung ist als Bildgeber eine Videokamera vorgesehen, die derart mit Blendschutzmitteln ausgestattet ist, dass sie nur in einem vorgebbaren Spektralbereich empfindlich ist. In einem ersten Ausführungsbeispiel kann dieser empfindliche Spektralbereich wenigstens einen schmalen Bereich des sichtbaren Spektrums umfassen. In einem weiteren Ausführungsbeispiel kann dieser Spektralbereich in dem infraroten Bereich des Spektrums liegen. Um eine möglichst gleich bleibende gute Ausleuchtung des Fahrzeuginnenraums sicherzustellen, kann eine an den Empfindlichkeitsbereich des Bildgebers angepasste Beleuchtungsquelle vorgesehen werden. Um die Bildqualität des Bildgebers weiter zu verbessern, werden durch das Blendschutzsystem des Fahrzeugs störende externe Lichteinflüsse weitgehend reduziert oder völlig unterdrückt. Dazu werden die in den Fahrzeugscheiben angeordneten steuerbaren Blendschutzmittel derart gesteuert, dass störende spektrale Anteile des von außen in das Fahrzeuginnere gelangenden Lichts gefiltert werden. Wenn also beispielsweise der Bildgeber in dem Infrarotbereich empfindlich ist und ggf. auch noch in diesem Spektralbereich wirksame Beleuchtungsmittel aktiv geschaltet sind, werden die in den Fahrzeugscheiben angeordneten Blendschutzmittel derart gesteuert, dass sie das Eindringen infraroter Strahlung in das Fahrzeuginnere weitgehend unterbinden. Wenn andererseits ein nur in einem schmalen Bereich oder in mehreren schmalen Bereichen des sichtbaren Spektrums empfindlicher Bildgeber vorgesehen ist, werden die Blendschutzmittel so gesteuert, dass gerade dieser schmale Bereich oder diese schmalen Bereiche des Spektrums aus der von außen in das Fahrzeuginnere eindringenden Strahlung ausgeblendet werden. Insgesamt ist dabei darauf zu achten, dass durch die beschriebene Filterung des Lichts die Sicht der Fahrzeuginsassen, insbesondere die des Fahrers nicht unzulässig beeinträchtigt wird, damit er das Verkehrsgeschehen noch genau verfolgen kann. Bei der Ausblendung von Teilbereichen des infraroten Spektrums sind dabei geringere Probleme zu erwarten, da diese ohnehin vom menschlichen Auge nicht wahrgenommen werden. Bei der Ausblendung von Teilbereichen des sichtbaren Spektrums werden die Blendschutzmittel vorzugsweise derart gesteuert, dass sie praktisch als sogenannte Notchfilter wirken. Dadurch registriert der Fahrer allenfalls eine leichte Färbung, die jedoch nicht weiter störend ist. Dadurch, dass auf die zuvor beschriebene Weise störende Spektralanteile wirksam ausgeblendet werden, wird das Innere der Fahrgastzelle, aus Sicht des Bildgebers, effektiv im Wesentlichen nur durch das auf den Bildgeber abgestimmte Beleuchtungssystem beleuchtet. Dieses Beleuchtungssystem ist zweckmäßig auf die Empfindlichkeit des Bildsensors des Bildgebers abgestimmt. Dadurch ergeben sich von äußeren Beleuchtungssituationen weitgehend unabhängige Kontrastverhältnisse, die für den Bildgeber optimal sind. Als Ergebnis ist eine wesentlich verbesserte Innenraumdetektion möglich. Dieses Blendschutzsystem lässt sich bei verschiedenen Arten von Bildgebern vorteilhaft einsetzen. Beispielsweise bei Mono- und Stereokamerasystemen, bei Monochrom- und Colorkameras, bei Wärmebildgeräten, aber mit gleich gutem Erfolg auch bei Bildgebern, die Laufzeitmessungen einsetzen, wie beispielsweise LIDAR- und Radar-Systeme. Durch die beschriebene Lösung kann eine bessere und zuverlässigere Funktionalität des Bildgebers erreicht werden. Weiterhin können durch diese Maßnahme technisch aufwendige und daher teure Bildgebersysteme mit einer großen Eingangsdynamik (> beispielsweise 96 dB) vermieden werden. Vorzugsweise wird die Dämpfung der störenden Spektralbereiche so bemessen, dass sich die Dynamik des Bildgebers auf etwa 8 bit (< etwa 48 dB) reduzieren lässt. In diesem Fall sind dann preiswerte Komponenten bei dem Bildgeber einsetzbar, die aus Massenproduktion bereits zur Verfügung stehen. Dadurch lassen sich die Systemkosten beträchtlich senken. Dies hat wiederum zur Folge, dass diese für die Förderung der Fahrsicherheit nützlichen Systeme eine weite Verbreitung finden können. Diese Ausführungsvariante der Erfindung wird im Folgenden anhand von Figur 2 weiter erläutert. Figur 2 zeigt beispielhaft ein Fahrzeugfenster 81, das eine als Blendschutzmittel wirkende Schicht 82 trägt. In dem in Figur 2 dargestellten Ausführungsbeispiel ist diese Schicht 82 auf der dem Fahrgastraum zugewandten Innenseite des Fahrzeugfensters 81 angeordnet. In einem anderen Ausführungsbeispiel derb Erfindung kann diese Schicht 81 jedoch auch auf der Außenseite des Fahrzeugfensters 81 angeordnet oder sogar in das Fenster 81 integriert sind. Die letzte Variante ist besonders einfach in Zusammenhang mit einem aus mehreren Schichten bestehenden Sicherheitsglas ausführbar. Die Schicht 82 ist mit einem Steuergerät 90 verbunden. Das Steuergerät 90 wiederum ist mit wenigstens einem Sensor 91 verbunden. Die Schicht 82 ist zweckmäßig derart steuerbar, dass sich ihre Transmissionseigenschaften durch entsprechende Steuersignale des Steuergeräts 90 beeinflussen lassen. Insbesondere ist die Schicht derart steuerbar, dass sie von außen auftreffendes Licht, hier durch die Pfeile 80 repräsentiert, selektiv absorbiert und daher nur noch einen Teil des Spektrums, hier durch die Pfeile 83 repräsentiert, in das Innere des Fahrzeugs eindringen lasst. Auf diese Weise ist ein wirksamer Blendschutz für die Fahrzeuginsassen und insbesondere für den den Innenraum des Fahrzeugs überwachenden Bildgeber realisierbar. Zweckmäßig werden daher durch die Schicht 82 insbesondere jene Anteile des Spektrums unterdrückt, die in dem Empfindlichkeitsbereich des Bildgebers liegen. Wenn bei einer Einrichtung der Bildgeber insbesondere für Strahlung in dem infraroten Bereich des Spektrums empfindlich ist, würde also die Schicht 82 insbesondere diesen Anteil des Spektrums aus der von außen eindringenden Strahlung ausfiltern. Das Steuergerät wertet dazu Signale wenigstens eines Sensors 91 aus, der die in den Innenraum des Fahrzeugs eindringende Strahlung (Pfeile 83) erfasst. In einer einfacheren Ausführungsvariante der Erfindung sind die Filtereigenschaften der Fahrzeugfenster nicht dynamisch steuerbar, sondern konstant. Dieser Effekt kann auf einfache Weise bereits bei dem Herstellungsprozess der für die Fahrzeugfenster vorgesehenen Glasscheiben erreicht werden, indem diese entweder optisch vergütet werden oder indem entsprechende Folien mit Filtereigenschaften auf die Scheiben aufgebracht werden. Diese einfachere Ausführungsvariante der Erfindung ist in Figur 1 dargestellt. Ein Fahrzeugfenster ist wiederum mit der Bezugsziffer 81 bezeichnet. Dieses Fahrzeugfenster 81 tragt eine Schicht 82, die eine selektive Filterwirkung aufweist. Die Schicht 82 filtert die von außen einfallende Strahlung (Pfeile 80) derart, dass nur noch ein nicht störender Anteil des Spektrums (Pfeil 83) in das Innere des Fahrzeugs gelangt. Diese Variante ist kostengünstiger umsetzbar, bietet jeder gegenüber dem in Figur 2 dargestellten Ausführungsbeispiel der Erfindung den Nachteil, dass die Filtereigenschaften der Schicht 82 nicht dynamisch steuerbar sind.

## Patentansprüche

1. Blendschutzsystem für ein Fahrzeug mit einer wenigstens einen Bildgeber (11, 32, 40, 50) aufweisenden Einrichtung für die Steuerung von Blendschutzmitteln (15,35,45,82), die die Blendschutzmittel in Abhängigkeit von einem ersten Signal des Bildgebers (11, 32, 40) steuert, **dadurch gekennzeichnet, dass** der Bildgeber (11, 32, 40, 50) nur für Teilbereiche des Spektrums empfindlich ist, und dass Blendschutzmittel (82) vorgesehen sind, die das Eindringen von Licht aus Teilbereichen des Spektrums in das Fahrzeug, für die der Bildgeber empfindlich ist, wenigstens reduzieren.

2. Blendschutzsystem nach Anspruch 1, **dadurch gekennzeichnet, dass** die Blendschutzmittel (82) mit den Fahrzeugscheiben (81) verbunden sind.

3. Blendschutzsystem nach einem der vorherigen Ansprüche, dass die Blendschutzmittel (82) steuerbar sind.

4. Blendschutzsystem nach einem der vorherigen Ansprüche, dass die Blendschutzmittel (82) für einen vorgebbaren Spektralbereich einen vorgebbaren Dämpfungswert haben.

5. Blendschutzsystem nach einem der vorherigen Ansprüche, dass der Bildgeber (11, 32, 40, 50) für den infraroten Bereich des Spektrums empfindlich ist.

6. Blendschutzsystem nach einem der vorherigen Ansprüche, dass der Bildgeber (11, 32, 40, 50) für wenigstens einen schmalen Bereich aus dem sichtbaren Bereich des Spektrums empfindlich ist.

7. Blendschutzsystem nach einem der vorherigen Ansprüche, dass es Beleuchtungsmittel umfasst, die den Innenraum des Fahrzeugs in einem Spektralbereich ausleuchten, für den der Bildgeber (11, 32, 40, 50) empfindlich ist.
